# EUROPEAN PATENT SPECIFICATION

(11) **EP 0 754 560 B1**
(45) Date of publication and mention of the grant of the patent: **26.01.2000**
(21) Application number: 96111058.2
(22) Date of filing: 10.07.1996
(51) Int. Cl.: B41M 5/00, C09D 5/02

(54) **Color ink jet recording sheet**
Mehrfarbige Tintenstrahlaufzeichnungsschicht
Feuille pour l'enregistrement multicolore par jet d'encre

(30) Priority: 20.07.1995 US 504545
(43) Date of publication of application: 22.01.1997
(73) Proprietor: Océ-USA Inc., Chicago, IL 60656 (US)
(72) Inventor: Sankar K., Paul, Branford, CT 06405 (US)
(74) Representative: Hanneman, Henri W., Dr.

(56) References cited:
- EP-A- 0 586 846
- EP-A- 0 649 752
- PATENT ABSTRACTS OF JAPAN vol. 11, no. 90 (M-573), 20 March 1987 & JP-A-61 242871 (CANON K.K.), 29 October 1986,
- DATABASE WPI Week 1995 Derwent Publications Ltd., London, GB; AN 95-144368 XP002016344 "INK-JET RECORDING SHEET WITH HIGH IMAGE DENSITY COMPRISES INK-ACCEPTING LAYER OF NON-SPHERICAL CATIONIC COLLOIDAL SILICA, COATED WITH FLUORESCENT BRIGHTENER AND/OR NONANOL OR NONYLPHENYL PENETRANT " & JP-A-07 068 923 (MITSUBISHI PAPER MILLS, LIMITED) , 14 March 1995
- PATENT ABSTRACTS OF JAPAN vol. 16, no. 153 (M-1235), 15 April 1992 & JP-A-04 007189 (KANZAKI PAPER MANUFACTURING COMPANY LIMITED), 10 January 1992,

## Description

### Technical Field

This invention relates to color ink jet printing and to a recording sheet bearing an imageable crosslinked matrix coating on its surface that is prepared from an aqueous-based formulation containing a water-soluble crosslinkable polymeric binder, a zirconium crosslinking agent, a cationically modified polymer and a highly adsorptive pigment of ink jet dyes.

### Background Art

Early ink jet printing was solely in monochrome, mostly black. Its early uses were initially in addressing mail and printing labels, and later in printing addresses, text and graphics. With the enormous increase of computer use, ink jet printing has become increasingly popular as an inexpensive means of electronic printing of text and graphics. Like other black and white media before it, such as photography, television and graphic arts, ink jet technology has been moving increasingly toward the use of color.

Recent advances in color ink jet printers are creating a considerable market potential and a demand for high quality, multi-color prints. Recording papers that were suitable for black and white printing, however, have proven to be inadequate for multi-color prints. In particular, they fall short in providing all the image qualities required, namely dense bright colors, sharp color-to-color boundaries, freedom from feathering, clean and bright backgrounds, water bleed-resistance, uniform color fill and good image resolution. As often happens, one set of qualities can be obtained only at the expense of another, thereby making it difficult to obtain all of the requisite qualities. While the characteristics of the color inks are a factor, the papers themselves are fundamentally deficient, and thus their results are below expectations when compared with other color technologies.

Surface coating of paper has traditionally been used to customize a paper's surface for various printing and imaging applications. While the ink jet prior art has generally advanced the means of improving papers for ink jet use, it has not specifically and adequately addressed the requirements of high quality multi-color printing.

Japanese patent application No. 4/007189 discloses ink jet recording media which contain in the image recording layer a zirconium salt to enhance ink receptivity. Recording media comprising water-soluble crosslinkable polymeric binder and a zirconium based crosslinking agent are not disclosed in this reference.

European patent application No. 0 586 846 discloses an ink jet recording sheet which comprises a support and an ink receiving layer provided on at least one side of the support and containing a cation-modified non spherical colloidal silica. The cation modifier may consist of hydrous aluminium oxide, hydrous zirconium oxide or hydrous tin oxide. An ink jet recording sheet comprising a water-soluble crosslinkable polymeric binder and a zirconium based crosslinking agent is not disclosed in this reference.

### Disclosure of the Invention

It is an object of the invention to provide surface coatings that meet the exacting demands of ink jet multi-color printing. Another object of the invention is to provide ink-jet multi-color recording media having the described requisite properties. It is a further object of the invention to provide a low-cost and environmentally favorable means of manufacturing ink jet media using aqueous-based coatings.

Accordingly, the present invention provides for an aqueous-based coating formulation for ink jet recording media, which comprises:
a) a water-soluble crosslinkable polymeric binder,
b) a highly adsorptive pigment of ink jet dyes in an amount from 2-10 parts by weight per part by weight of crosslinkable polymeric binder,
c) a zirconium crosslinking agent that contains a zirconium cation of the formula Zr⁴⁺ or a zirconyl cation of the formula ZrO²⁺, and
d) a cationically modified polymer.

The aqueous-based formulation is applied to a base support and heated to remove water from the formulation and to induce crosslinking between the crosslinkable polymeric binder and the crosslinking agent, thereby producing a crosslinked, three dimensional polymeric matrix or network within which there are dispersed the adsorptive pigment and the cationically modified polymer.

The composition and physical character of the crosslinked matrix determines the wetting of its surface by ink jet inks. The use of water-soluble polymers in particular favors wetting by ink jet inks, as does the presence of the pigment. The thickness of the matrix determines lateral and perpendicular diffusion of the inks and consequently both the image density and resolution.

The use of a zirconium crosslinking agent that contains a zirconium cation of the formula Zr⁴⁺ or a zirconyl cation of the formula ZrO²⁺ (e.g., zirconyl chloride, zirconyl nitrate, zirconyl acetate, zirconium ammonium carbonate, zirconium sulfate, and the like) permits a very high pigment to water-soluble crosslinkable polymeric binder ratio and a uniform microporous structure, thereby enhancing imaging qualities of the prepared matrix. Use of the zirconium crosslinking agent provides the inventive coating compositions with a superior pot life and a favorable crosslinking rate. Its use also produces a cohesive and adhesive crosslinked polymeric matrix, which is a desired objective.

The use of a highly absorptive pigment provides a highly adsorptive surface for extending dyes, while the cationically modified polymer confers water resistance to the ink jet dyes. Also, all the components in the inventive formulations are water soluble or dispersible, which provides for an environmentally favorable and less costly means of manufacture.

### Detailed Description of the Invention

The following Detailed Description is provided as an aid to those desiring to practice the present invention. This detailed description is not to be construed as unduly limiting to the invention claimed hereinafter, or to the equivalent embodiments thereof that are described herein or otherwise encompassed hereby.

The special requirements of multi-color ink jet printing are achieved through the inventive use of a three-dimensional micro-porous matrix having high uniform adsorption and a suitable balance of properties for both the lateral and penetrating diffusion of inks. The ink-jet recording media of the present invention comprise a substrate sheet having an aqueous ink receiving matrix layer thereon.

The aqueous ink receiving matrix layer is prepared from an aqueous-based coating formulation that contains
(1) a water-soluble crosslinkable polymeric binder,
(2) a highly adsorptive pigment of ink jet dyes,
(3) a zirconium crosslinking agent that contains a zirconium cation having the formula Zr⁴⁺ or a zirconyl cation having the formula ZrO²⁺, and
(4) a cationically modified polymer.

The aqueous ink receiving matrix layer provides prints having dense bright colors, sharp color-to-color boundaries, freedom from feathering, water-bleed resistance, clean and bright backgrounds, uniform color fill and good image resolution. These properties are advantageously achieved through the use of a unique crosslinking system that utilizes a water-soluble crosslinkable polymeric binder and a zirconium crosslinking agent that contains a zirconium or zirconyl cation of the formula Zr⁴⁺ or ZrO²⁺, respectively. Most preferably, the crosslinking system utilizes a zirconium crosslinking agent containing a ZrO²⁺ cation, such as zirconyl chloride, zirconyl nitrate, zirconyl acetate, zirconium ammonium carbonate, and the like.

Suitable water-soluble crosslinkable polymeric binders encompassed by the present invention contain reactive hydroxyl groups. Preferred water-soluble crosslinkable polymeric binders include polyvinyl alcohol, hydroxyethyl cellulose and starch. One of the most preferred water-soluble crosslinkable polymeric binders to use in the inventive formulations is polyvinyl alcohol with a degree of hydrolysis of about 85-99+%.

A suitable ratio of the crosslinking agent to the water-soluble crosslinkable polymeric binder is from about 0.1:1 to about 0.7:1, and preferably from about 0.2:1 to about 0.5:1. If the ratio of the zirconium cross-linking agent to water-soluble crosslinkable polymeric binder is less than about 0.1:1, inadequate matrix cohesion results and pigment "dusting" occurs during handling. On the other hand, if the ratio of the zirconium crosslinking agent to the water-soluble crosslinkable polymeric binder is more than about 0.7:1, there is a lowering of print density, particularly in the color of black.

A cationically modified polymer is incorporated into the matrix to provide water resistance to the color image. The colors that are formed must be water-resistant during normal handling and use. Acceptable cationically modified polymers are well known for this purpose in the prior art. The selected cationically modified polymers are preferably water-soluble, compatible with the water-soluble crosslinkable polymeric binder, and have no adverse effect on the imaging process and the colors in the image. The cationically modified polymers preferably do not crosslink with the zirconium crosslinking agent.

Among the cationically modified polymers that can be used in the invention, there are those that carry a quaternary ammonium group in their molecular structure. Of these polymers, those that are soluble or readily dispersable in one of the inventive coating formulations and that do not participate in the crosslinking reaction are most preferred. The cationic group (e.g., quaternary ammonium group) in these polymers may be: (1) a member of the polymeric main chain, or (2) a member of a side chain attached to the polymeric main chain. Exemplary of the first group of these polymers are those represented by the formula:

-[N⁺(R)(R₁)-(CH₂)ₙ-N⁺(R)(R₁)-(CH₂)ₘ-X(CH₂)ₚ]_{q}

wherein, n, m, p, and q, are integers, R and R₁ are the same or different and are organic radicals selected from the group consisting of substituted and unsubstituted alkyl and aralkyl radicals, and X is a bridging group selected from the group consisting of CH₂, O, S, N, and the like. Suitable substituents for R and R₁ include methyl, ethyl, propyl, isobutyl, methoxymethyl, methoxyethyl, ethoxymethyl, ethoxyethyl, benzyl, phenethyl, and the like. Exemplary of the second group of these polymers are polyacrylic and polymethacrylic esters and amides in which the ester or amido group carries a quaternary ammonium group. Typical examples of such polymers are disclosed in U.S. Patents 4,830,911, and 4,371,582, both of which are incorporated herein by reference in their entirety.

It is noted that suitable cationically modified polymers are also derivable from dimethylaminoethyl methacrylate, dimethyl diallyl ammonium chloride, and the like. They may be in the form of either polymers or copolymers. Preferably, they are not crosslinkable with the zirconium crosslinking agent and have a low molecular weight. Poly(dimethylaminoethyl methacrylate) with an average molecular weight of about 4000-8000 is one of the most preferred cationically modified polymers that one can use in the invention.

The cationically modified polymer is preferably used in the matrix coatings in an amount of about 0.05 to 0.35 parts per part of the pigment. More than about 0.35 parts of the cationically modified polymer results in a reduced ink absorption capacity for the recording layer; and when less than about 0.05 parts per part of pigment is used there is inadequate water resistance.

The attainment of the above described qualities of sharp color-to-color boundaries, freedom from feathering, uniform color fill and good resolution is at least in part due to the use of particulates or pigments in the coating compositions that have a very high surface adsorptivity for color ink jet dyes. These particulates are the basis by which dense images and bright colors are obtained.

Suitable pigments, according to the present invention, include synthetic silica, clay, diatomaceous earth, aluminum silicate, synthetic zeolite, alumina, etc. The preferred pigment is synthetic silica having certain oil absorption, pore volume and particle size characteristics. For silica pigment, oil absorption is considered to be a parameter of aqueous ink absorption. Oil absorption suitable for the invention is in the range of about 150-400 gm/ 100 gm of the pigment, and preferably about 200-300 gm/100 gm of the pigment. When the oil absorption is less than about 100 gm/100 gm, unacceptable ink absorption is found; poor print density is found when the oil absorption is more than about 400 gm/100 gm of the pigment. Ink absorption refers to ink penetration into the matrix whereas adsorption refers to the extension and attachment of the dye onto the surface of the pigment.

During the silica manufacturing process, a fine pore structure is preferably formed within the silica particles. This is believed to contribute to the oil absorption of the silica. A suitable silica pigment for the present invention possesses a pore volume in the range of about 1.0-2.5 ml/gm of the silica pigment, preferably about 1.2-1.8 ml/gm. The average particle size of the suitable synthetic silica pigment for the invention is in the range of about 1-10 microns.

To obtain the required high surface adsorptivity, the pigment is bound by the least amount of a water-soluble crosslinkable polymeric binder that is consistent with good cohesive strength of the matrix and adhesion to the base support. Cohesive adhesion refers to the bonding of the crosslinked polymeric binder to the pigment. Inadequate bonding results in unacceptable loss of pigment from the surface during handling, referred to as dusting.

The pigment/water-soluble crosslinkable polymeric binder ratio (i.e., Pigment/Binder ratio or P/B ratio) for the present invention is in the range of about 2-10, preferably about 2-7. The higher P/B ratio also makes possible a thin matrix which enhances image quality. When the P/B ratio is less than about 2, ink absorption capacity of the image-receiving layer decreases to an unacceptable level, and very poor image resolution results. When the P/B ratio is more than about 10, there is a serious loss of cohesive adhesion.

The pot-life of the inventive formulations is about 6 days or more, even at higher concentrations of the zirconium cross-linking agent. Surprisingly, the addition of only a relatively small amount of a zirconium crosslinking agent, especially those containing a ZrO²⁺ cation, produces a mix having a desirable low viscosity while providing the requisite cohesive strength to the matrix layer.

The substrate of the present invention can be paper, vellum, cloth or film. A high grade bond is preferred as the paper substrate. Both acid and alkaline sized paper of different levels of sizing are suitable. The preferred degree of sizing is in the range of 5-55 seconds, as measured by Hercules Sizing Test. When the sizing degree is less than 5 seconds, the ink is absorbed irregularly resulting in feathering and poor color rendition. If the sizing degree is more than 55 seconds, a higher matrix coat weight is required.

The use of optical brightening agents (brighteners) is employed to enhance the background brightness of ink jet recording media. Since most of the commercially available optical brighteners that are desired for use with the inventive matrix are anionic, this makes them incompatible with the cationically modified polymers in the coating formulation. A novel way to utilize these brighteners is to overcoat the image-receiving matrix with an aqueous solution of these agents and then dry. The inventive matrix accepts this overcoat, thereby significantly enhancing the appearance of the prepared ink jet recording media. Thus, the use of an optical brightener in this unconventional fashion helps in providing a bright and clean multi-color ink jet print.

The use of the anionic brightener in an overcoat was found to provide superior results to using a compatible cationic brightener in the matrix coat. This is because the former more effectively absorbs the ultraviolet component of normal viewing light and re-emits it as visible light. Further, the brightness of the produced recording media is superior to that obtained when the anionic optical brightener is conventionally included in the body of the matrix. When used as an overcoat, the optical brightener does not form a discrete layer, rather it extends itself over the surface of the bound pigment in the matrix thereby exposing a very large surface of optical brightener. Thus, an ink jet recording media can be obtained that possesses a very high reflective brightness.

An optical brightener overcoat can be applied to widely varying matrix compositions of ink jet recording media, and in such instances the brightener may be either anionic, cationic or nonionic. However, it is most effective to use such overcoats on ink jet recording media that comprise a substrate having on a surface thereof an ink jet ink receiving matrix or layer that possesses a pigment-to-binder ratio in the range of about 2 to 10 and preferably about 2 to 7. Such pigment to binder ratios help to ensure that a very large surface of the optical brightener is obtained to absorb the ultraviolet component of normal viewing light and re-emit it as visible light thereby enhancing print brightness.

Appropriate coating weights for an optical brightener overcoat can vary over a very wide range, while still effectively enhancing print brightness. For example, using Meyer rod sizes of from 0 to 24 with a 5% water solution of PHORWITE PSK (Miles, Inc.) shows a significant improvement in brightness for all rod sizes without any deleterious effect on image qualities, even with the highest rod size. The size #4 rod is the most preferred because, it provides the maximum brightness increase at the lowest cost. The #4 rod estimates to apply about 1.0 gm per square meter. The minimum coat weight that is suitably effective is about 0.2 gm per square meter, and the maximum coating weight that is economically reasonable is about 3.5 gm per square meter.

The most preferred optical brighteners for use in an overcoat are PHORWITE PSK (anionic) from Miles, Inc., and TINOPAL SCP (anionic) from Ciba-Geigy. Less preferred brighteners are TINOPAL SK (anionic) and UVITEX ERN (non-ionic), both from Ciba-Geigy, and LEUCOPHOR BCR (anionic) and LEUCOPHOR KCB (cationic), both from Sandoz Chemical, even though these are also useful in preparing "optical brightening" overcoats for ink jet recording media.

In addition to the above-mentioned components, different additives may be utilized in the inventive formulations to give desired properties to the produced ink jet recording media. These additives include surfactants, defoamers, uv-absorbers, humectants, and the like.

Various coating methods are employed in the manufacture of non-photographic imaging materials. These include Meyer rod, air knife, reverse roll and extrusion coating. The Meyer rod method is preferred because of the ease of its use. Thus, the relatively low and consistent viscosity of the inventive formulation is of particular advantage. Suitable dry coat weight on the substrate is in the range of about 2-10 gm/square meter, and the preferable weight is about 3-7 gm/square meter. Less than about 2.0 gm/square meter and more than about 10 gm/square meter coating weight results in unacceptable print quality.

The inventive aqueous-based coating formulation for the ink jet recording media is applied to a substrate and dried at a temperature of about 220°F to remove the water and induce crosslinking. The resulting multi-color ink jet recording media is imaged by an HP 650 C ink jet printer, or its equivalent, to provide dense bright colors, sharp color to color boundaries, freedom from feathering, clean and bright backgrounds, water bleed-resistance, uniform color fill and good image resolution. Optionally, a coating comprising an optical brightener may be applied over the multi-color ink jet recording matrix to further enhance the sheet brightness.

The present invention may include a back-coating on the opposite side of the image receiving layer to control curl. The anti-curling coating material may contain water-soluble polymeric materials, among others.

Multi-color ink jet printing has special requirements and importantly includes the following Image Qualities. The Deficiency column indicates undesirable characteristics of the image qualities.

| | **IMAGE QUALITY** | **DEFICIENCY** |
|---|---|---|
| 1. | Print Density | Low image density |
| | | |
| 2. | Color Uniformity | Streaks, mottle, bands and other color non-continuities of block color areas. |
| | | |
| 3. | Color Brightness | Presence of gray as a component of the color. |
| | | |
| 4. | Color to Color Edge Sharpness | Ragged interface when two colors abut. |
| | | |
| 5. | Feathering Resistance | Uneven edge to color. |
| | | |
| 6. | Water Resistance | Leaching out of color after a 15 minute water immersion. |
| | | |
| 7. | Matrix Adhesive Strength | Pigment dusting determined by lightly dragging a finger across a minimum density area. |

The Habib Deficiency Rating [HDR] method is used to rate visually each of the above image quality characteristics based on a 0 to 7 scale, where 0 is the most favorable result, and 7 is the least. A maximum HDR value may be assigned to a characteristic to denote its lowest acceptable rating. The HDR method provides a simple and rapid means of making valid comparisons between imaged ink jet recording media.

The invention is hereafter described with reference to the following specific Examples and Comparative Examples. The weight is in grams for all formula components, and where solutions are used the % concentration is weight by weight.

### EXAMPLE 1

| | |
|---|---|
| Water | 15.0 |
| | |
| SYLOID-72 | 5.0 |
| | |
| 6.66% Polyvinyl Alcohol Solution (AIRVOL-523) | 17.0 |
| | |
| Zirconyl Chloride (25% solution) | 1.1 |
| | |
| DPP-2028 (40% solution) | 2.0 |

The polyvinyl alcohol is dissolved by heating in water at 90°C for about 30 minutes. SYLOID-72 [oil absorption 200 gm/100 gm, pore volume 1.2 and average particle size 6.0 micron] (supplied by W.R. Grace) is dispersed into the mixture of water and AIRVOL-523 (supplied by Air Products) solution under the laboratory stirrer for 20 minutes. Then zirconyl chloride (supplied by Magnesium Electron, Inc) is added and mixed for 20 minutes. The cationically modified water-soluble polymer DPP-2028 (a polymeric dimethyl quaternary ammonium salt carrying its quaternary ammonium groups in its polymeric main chain; supplied by Betz Paper Chemical) is added and stirred for 20 minutes.

The above mixture is coated on HAMMERMILL bond paper using Meyer rod #14 and dried at 100°C for 1.5 minutes; the dry coat weight is 4 gm/square meter. The paper sheet is then tested on HP 650 C ink-jet printer.

### EXAMPLE 2

Example 1 is repeated using SYLOID-7000 [oil absorption 300 gm/100 gm, pore volume 1.8, and average particle size 2.8 micron] (supplied by W.R.Grace) instead of SYLOID-72.

### EXAMPLE 3

Example 1 is repeated using 11 grams of 99+% hydrolyzed AIRVOL-125 (supplied by Air Products) instead of AIRVOL-523.

### EXAMPLE 4

Example 1 is repeated using an equal weight of the cationically modified polymer AX-35-453 (aqueous based solution containing about 40% by weight of a polymeric trimethylaminoethyl methacrylate chloride; supplied by Interpolymer Corporation) instead of DPP-2028. A 5% aqueous solution of PHORWHITE PSK anionic optical brightener (supplied by Miles) is overcoated using a #4 Meyer rod and dried at 100°C for one minute. The sheet brightness is increased by at least 10%.

### EXAMPLE 5

Example 1 is repeated using 1.6 gm of 16.7% zirconium sulfate (supplied by Aldrich Chemical) instead of zirconyl chloride.

### EXAMPLE 6

| | |
|---|---|
| SYLOID-72 | 13 |
| | |
| 3.5% CELLOSIZE WP Hydroxyethyl Cellulose solution (Union Carbide) | 135 |
| | |
| Zirconyl Chloride | 5 |
| | |
| DPP-2028 | 6 |

SYLOID-72 is dispersed into the hydroxyethyl cellulose solution under the laboratory stirrer for 20 minutes. Zirconyl chloride is added and mixed for 20 minutes. DPP-2028 is then added and mixed for another 15 minutes. The HAMMERMILL bond paper is then coated using Meyer rod #20 and dried at 100°C for 1.5 minutes; the dry coat weight is 5 gm/square meter. The paper sheet is then tested on HP 650 C ink-jet printer.

### EXAMPLE 7

| | |
|---|---|
| SYLOID-72 | 15 |
| | |
| Water | 75 |
| | |
| 6.66% Rice Starch Solution | 100 |
| | |
| Zirconyl Chloride | 5 |
| | |
| DPP-2028 | 6 |

The starch is stirred in water and heated at 100°C until dissolved. The above ingredients are then mixed as per the procedures of Example 5 and coated on HAMMERMILL bond paper using Meyer rod #24 and dried at 100°C for 1.5 minutes; the dried coat weight is 5 gm/square meter. The paper sheet is then tested on HP 650 C printer.

### COMPARATIVE EXAMPLE C-1

Example 1 is repeated with the DPP-2028 deleted.

### COMPARATIVE EXAMPLE C-2

Example - 1 is repeated using polyvinyl pyrrolidone (K-90, supplied by International Specialty Polymer) instead of AIRVOL-523.

### COMPARATIVE EXAMPLE C-3

Example 1 is repeated replacing zirconyl chloride with 1.2 grams of 25% glutaraldehyde supplied by J.T. Baker Chemical Co.

The above ingredients are mixed as per the procedures of Example 3, coated on HAMMERMILL bond paper using Meyer rod #24 and dried at 100°C for 1.5 minutes; the dried coat weight is 5 gm/square meter. The paper sheet is then tested on HP 650 C printer.

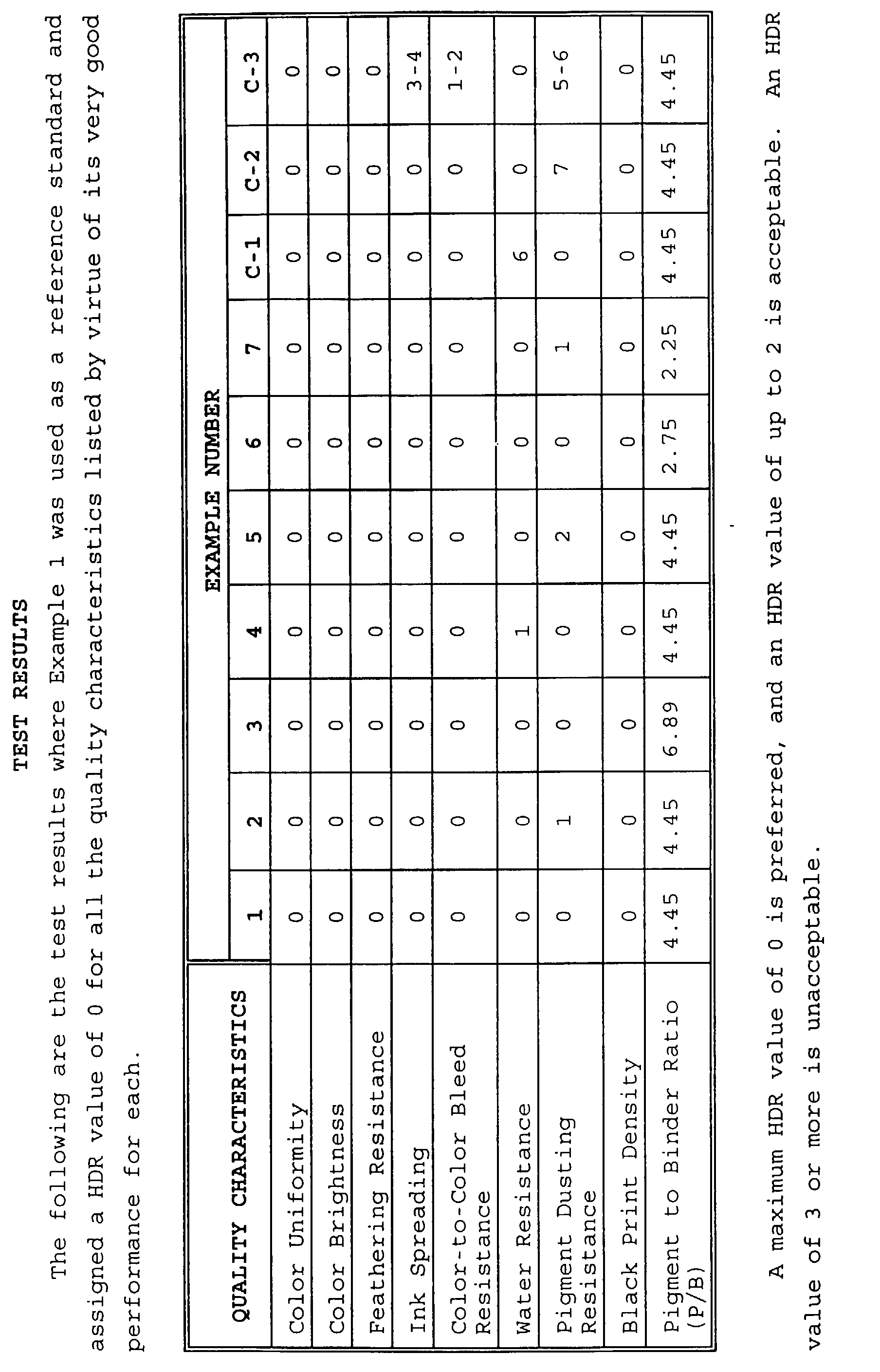

## Claims

1. An aqueous-based coating formulation for ink jet recording media, which comprises:
a) a water-soluble crosslinkable polymeric binder,
b) a highly adsorptive pigment of ink jet dyes in an amount from about 2 to about 10 parts by weight per part by weight of water-soluble crosslinkable polymeric binder,
c) a zirconium crosslinking agent that contains a Zr⁴⁺ or ZrO²⁺ cation, and
d) a cationically modified polymer.

2. The aqueous-based coating formulation of claim 1, wherein:
the water-soluble crosslinkable polymeric binder contains reactive hydroxyl groups.

3. The aqueous based coating formulation of claim 1, wherein:
the water-soluble crosslinkable polymeric binder is selected from the group consisting of polyvinyl alcohol, hydroxyethyl cellulose and starch.

4. The aqueous-based coating formulation of claim 1, wherein:
the water-soluble crosslinkable polymeric binder is a polyvinyl alcohol having a degree of hydrolysis of about 85 to 99+%.

5. The aqueous-based coating formulation of claim 1, wherein:
the zirconium crosslinking agent contains a ZrO²⁺ cation.

6. The aqueous-based coating formulation of claim 1, wherein:
the zirconium crosslinking agent contains a Zr⁴⁺ cation.

7. The aqueous-based coating formulation of claim 1, wherein:
the zirconium crosslinking agent is selected from the group consisting of zirconyl chloride, zirconyl nitrate, zirconyl acetate, zirconium ammonium carbonate and zirconium sulfate.

8. The aqueous-based coating formulation of claim 1, wherein:
the cationically modified polymer is present in the coating composition in an amount of about 0.05 to about 0.35 parts per part of the pigment, on a weight per weight basis.

9. The aqueous-based coating formulation of claim 1, wherein:
(1) the cationically modified polymer contains a quaternary ammonium group in its molecular structure,
(2) the cationically modified polymer is readily dispersable or soluble in said coating formulation, and
(3) the cationically modified polymer does not crosslink with the zirconium crosslinking agent.

10. The aqueous-based coating formulation of claim 9, wherein:
the cationically modified polymer is represented by the formula:
-(N⁺(R)(R₁)-(CH₂)ₙ-N⁺(R)(R₁)-(CH₂)ₘ-X(CH₂)ₚ)_{q}
wherein,
n, m, p, and q, are the same or different and are integers,
R and R₁ are the same or different and are organic radicals selected from the group consisting of substituted and unsubstituted alkyl and aralkyl radicals, and
X is a bridging group selected from the group consisting of CH₂, O, S and N.

11. The aqueous-based coating formulation of claim 9, wherein:
the cationically modified polymer is selected from the group consisting of polyacrylic and polymethacrylic esters and amides in which the ester or amido group thereof contains said quaternary ammonium group.

12. The aqueous-based coating formulation of claim 1, wherein:
the cationically modified polymer is a polymer or copolymer of dimethylaminoethyl methacrylate or dimethyl diallyl ammonium chloride.

13. The aqueous-based coating formulation of claim 1, wherein:
the cationically modified polymer is poly(dimethylaminoethyl methacrylate) having an average molecular weight of about 4000 to 8000.

14. The aqueous-based coating formulation of claim 1, wherein:
the pigment is present in the formulation in a ratio of about 2 to about 10, on a weight/weight basis, based on the amount of the water-soluble crosslinkable polymeric binder present in the coating formulation; or
the pigment is present in the formulation in a ratio of about 2 to about 7, on a weight/weight basis, based on the amount of the water-soluble crosslinkable polymeric binder present in the coating formulation.

15. The aqueous-based coating formulation of claim 1, wherein:
the pigment has an oil absorption of about 150 to 400 gm per 100 gm of the pigment, and is selected from the group consisting of synthetic silica, clay, diatomaceous earth, aluminum silicate, synthetic zeolite and alumina.

16. A multi-color ink jet recording media, comprising a substrate having coated on a surface thereof, a matrix layer prepared from an aqueous based coating formulation that contains:
a) water-soluble crosslinkable polymeric binder,
b) a highly adsorptive pigment of ink jet dyes in an amount from about 2 to about 10 parts by weight per part by weight water-soluble crosslinkable polymeric binder
c) a zirconium crosslinking agent that contains a Zr⁴⁺ or ZrO²⁺ cation, and
d) a cationically modified polymer.

17. The multi-color ink jet recording media of claim 16, wherein:
the water-soluble crosslinkable polymeric binder contains reactive hydroxyl groups.

18. The multi-color ink jet recording media of claim 16, wherein:
the water-soluble crosslinkable polymeric binder is selected from the group consisting of polyvinyl alcohol, hydroxyethyl cellulose and starch.

19. The multi-color ink jet recording media of claim 16, wherein:
the water-soluble crosslinkable polymeric binder is polyvinyl alcohol having a degree of hydrolysis of about 85 to 99+%.

20. The multi-color ink jet recording media of claim 16, wherein:
the zirconium crosslinking agent contains a ZrO²⁺ cation.

21. The multi-color ink jet recording media of claim 16, wherein:
the zirconium crosslinking agent contains a Zr⁴⁺ cation.

22. The multi-color ink jet recording media of claim 16, wherein:
the zirconium crosslinking agent is selected from the group consisting of zirconyl chloride, zirconyl nitrate, zirconyl acetate, zirconium ammonium carbonate and zirconium sulfate.

23. The multi-color ink jet recording media of claim 16, wherein:
the cationically modified polymer is present in the coating composition in an amount of about 0.05 to about 0.35 parts per part of the pigment, on a weight per weight basis.

24. The multi-color ink jet recording media of claim 16, wherein:
(1) the cationically modified polymer contains a quaternary ammonium group in its molecular structure,
(2) the cationically modified polymer is readily dispersable or soluble in said coating formulation, and
(3) the cationically modified polymer does not crosslink with the zirconium crosslinking agent.

25. The multi-color ink jet recording media of claim 24, wherein:
the cationically modified polymer is represented by the formula:
-(N⁺(R)(R₁)-(CH₂)ₙ-N⁺(R)(R₁)-(CH₂)ₘ-X(CH₂)ₚ)_{q}
wherein,
n, m, p, and q, are the same or different and are integers,
R and R₁ are the same or different and are organic radicals selected from the group consisting of substituted and unsubstituted alkyl and aralkyl radicals, and
X is a bridging group selected from the group consisting of CH₂, O, S and N.

26. The multi-color ink jet recording media of claim 24, wherein:
the cationically modified polymer is selected from the group consisting of polyacrylic and polymethacrylic esters and amides in which the ester or amido group thereof contains said quaternary ammonium group.

27. The multi-color ink jet recording media of claim 16, wherein:
the cationically modified polymer is a polymer or copolymer of dimethylaminoethyl methacrylate or dimethyl diallyl ammonium chloride.

28. The multi-color ink jet recording media of claim 16, wherein:
the cationically modified polymer is a poly(dimethylaminoethyl methacrylate) having an average molecular weight of about 4000 to 8000.

29. The multi-color ink jet recording media of claim 16, wherein:
the pigment is present in the coating formulation in a ratio of about 2 to about 10, on a weight/weight basis, based on the amount of the water-soluble crosslinkable polymeric binder present in the coating formulation; or
the pigment is present in the coating formulation in a ratio of about 2 to about 7, on a weight/weight basis, based on the amount of the water-soluble crosslinkable polymeric binder present in the coating formulation.

30. The multi-color ink jet recording media of claim 16, wherein:
the recording media additionally comprises an overlayer containing an optical brightener on a surface of the matrix layer.

31. An ink jet recording media according to claim 16 having on a surface of the matrix layer on overcoat comprising an optical brightener.

## Patentansprüche

1. Beschichtungsformulierung auf wäßriger Basis für Tintenstrahlaufzeichnungsmedien mit:
a) einem wasserlöslichen quervernetzbaren polymeren Bindemittel,
b) einem hochadsorptiven Pigment für Tintenstrahlfarbstoffe in einer Menge von etwa 2 bis etwa 10 Gewichtsteilen pro Teil wasserlöslichen quervernetzbaren polymeren Bindemittels,
c) einem Zirkonium-Quervernetzungsmittel, daß ein Zr⁴⁺ oder ein ZrO²⁺-Kation enthält, und
d) einem kationisch modifizierten Polymer.

2. Beschichtungsformulierung nach Anspruch 1, bei der das wasserlösliche quervemetzbare Bindemittel reaktive Hydroxylgruppen enthält.

3. Beschichtungsformulierung nach Anspruch 1, bei der:
das wasserlösliche quervernetzbare polymere Bindemittel ausgewählt ist aus der Gruppe bestehend aus Polyvinylalkohol, Hydroxyethylzellulose und Stärke.

4. Beschichtungsformulierung nach Anspruch 1, bei der:
das wasserlösliche quervernetzbare polymere Bindemittel ein Polyvinylalkohol ist, der einen Hydrolysegrad von etwa 85 bis 99+% hat.

5. Beschichtungsformulierung nach Anspruch 1, bei der:
das Zirkonium-Quervernetzungsmittel ein ZrO²⁺-Kation enthält.

6. Beschichtungsformulierung nach Anspruch 1, bei der:
das Zirkonium-Quervernetzungsmittel ein Zr⁴⁺-Kation enthält.

7. Beschichtungsformulierung nach Anspruch 1, bei der :
das Zirkonium-Quervernetzungsmittel ausgewählt ist aus der Gruppe bestehend aus Zirkonylchlorid, Zirkonylnitrat, Zirkonylazetat, Zirkonium-Ammoniumkarbonat und Zirkoniumsulfat.

8. Beschichtungsformulierung nach Anspruch 1, bei der:
das kationisch modifizierte Polymer in der Beschichtungszusammensetzung in einer Menge von etwa 0,05 bis etwa 0,35 Gewichtsteilen pro Gewichtsteil des Pigments enthalten ist.

9. Beschichtungsformulierung nach Anspruch 1, bei der:
(1) das kationisch modifizierte Polymer eine quaternäre Ammoniumgruppe in ihrer Molekularstruktur enthält,
(2) das kationisch modifizierte Polymer in der genannten Beschichtungsformulierung leicht dispergierbar oder löslich ist und
(3) das kationisch modifizierte Polymer sich nicht mit dem Zirkonium-Quervernetzungsmittel quervernetzt.

10. Beschichtungsformulierung nach Anspruch 9, bei der:
das kationisch modifizierte Polymer durch die Formel:
-[N⁺(R) (R₁) - (CH₂)ₙ- N⁺ (R) (R₁) - (CH₂)ₘ- X (CH₂)ₚ]_{q}
repräsentiert wird, wobei
n, m. p und q gleiche oder verschiedene ganze Zahlen sind,
R und R₁ dieselben oder verschiedene anorganische Radikale sind, die ausgewählt sind aus der Gruppe bestehend aus substituierten und unsubstituierten Alkyl- und Aralkylradikalen und
X eine brückenbildende Gruppe ist, ausgewählt aus der Gruppe bestehend aus CH₂, O, S und N.

11. Beschichtungsformulierung nach Anspruch 9, bei der:
das kationisch modifizierte Polymer ausgewählt ist aus der Gruppe bestehend aus Polyacryl- und Polymethacrylestern und -amiden, in denen die Ester- oder Amidgruppe die quaternäre Ammoniumgruppe enthält.

12. Beschichtungsformulierung nach Anspruch 1, bei der:
das kationisch modifizierte Polymer ein Polymer oder Kopolymer von Dimethylaminoethyl-Methacrylat oder Dimethyl-Diallyl-Ammoniumchlorid ist.

13. Beschichtungsformulierung nach Anspruch 1, bei der:
das kationisch modifiziere Polymer Poly(Dimethylaminoethyl-Methacrylat) mit einem mittleren Molekulargewicht von etwa 4 000 bis 8 000 ist.

14. Beschichtungsformulierung nach Anspruch 1, bei der:
das Pigment in der Formulierung in einem Gewichtsverhältnis von etwa 2 bis etwa 10 enthalten ist, bezogen auf die Menge des in der Beschichtungsformulierung enthalten wasserlöslichen quervernetzbaren polymeren Bindemittels, oder
das Pigment in der Formulierung in einem Gewichtsverhältnis von etwa 2 bis etwa 7 enthalten ist, bezogen auf die Menge des in der Beschichtungsformulierung vorhandenen wasserlöslichen quervernetzbaren polymeren Bindemittels.

15. Beschichtungsformulierung nach Anspruch 1, bei der:
das Pigment eine Ölabsorption von etwa 150 bis 400 gm pro 100 gm des Pigments hat und ausgewählt ist aus der Gruppe bestehend aus synthetischem Silika, Ton, Diatomazeenerde, Aluminiumsilikat, synthetischem Zeolith und Aluminiumoxid.

16. Mehrfarb-Tintenstrahlaufzeichnungsmedium mit einem Substrat, das auf einer seiner Oberflächen mit einer Matrixschicht beschichtet ist, die aus einer Beschichtungsformulierung auf wäßriger Basis hergestellt ist, die enthält:
a) ein wasserlösliches quervernetzbares polymeres Bindemittel,
b) ein hochadsorptives Pigment für Tintenstrahlfarbstoffe in einer Menge von etwa 2 bis etwa 10 Gewichtsteilen pro Teil wasserlöslichen quervernetzbaren polymeren Bindemittels,
c) ein Zirkonium-Quervernetzungsmittel, daß ein Zr⁴⁺ oder ein ZrO²⁺-Kation enthält, und
d) ein kationisch modifiziertes Polymer.

17. Aufzeichnungsmedium nach Anspruch 16, bei dem:
das wasserlösliche quervernetzbare Bindemittel reaktive Hydroxylgruppen enthält.

18. Aufzeichnungsmedium nach Anspruch 16, bei dem:
das wasserlösliche quervernetzbare polymere Bindemittel ausgewählt ist aus der Gruppe bestehend aus Polyvinylalkohol, Hydroxyethylzellulose und Stärke.

19. Aufzeichnungsmedium nach Anspruch 16, bei dem:
das wasserlösliche quervernetzbare polymere Bindemittel ein Polyvinylalkohol ist, der einen Hydrolysegrad von etwa 85 bis 99+% hat.

20. Aufzeichnungsmedium nach Anspruch 16, bei dem:
das Zirkonium-Quervernetzungsmittel ein ZrO²⁺-Kation enthält.

21. Aufzeichnungsmedium nach Anspruch 16, bei dem:
das Zirkonium-Quervernetzungsmittel ein Zr⁴⁺-Kation enthält.

22. Aufzeichnungsmedium nach Anspruch 16, bei dem:
das Zirkonium-Quervernetzungsmittel ausgewählt ist aus der Gruppe bestehend aus Zirkonylchlorid, Zirkonylnitrat, Zirkonylazetat, Zirkonium-Ammoniumkarbonat und Zirkoniumsulfat.

23. Aufzeichnungsmedium nach Anspruch 16, bei dem:
das kationisch modifizierte Polymer in der Beschichtungszusammensetzung in einer Menge von etwa 0,05 bis etwa 0,35 Gewichtsteilen pro Gewichtsteil des Pigments enthalten ist.

24. Aufzeichnungsmedium nach Anspruch 16, bei dem:
(1) das kationisch modifizierte Polymer eine quaternäre Ammoniumgruppe in ihrer Molekularstruktur enthält,
(2) das kationisch modifizierte Polymer in der genannten Beschichtungsformulierung leicht dispergierbar oder löslich ist und
(3) das kationisch modifizierte Polymer sich nicht mit dem Zirkonium-Quervernetzungsmittel quervernetzt.

25. Aufzeichnungsmedium nach Anspruch 24, bei dem:
das kationisch modifizierte Polymer durch die Formel:
-[N⁺(R) (R₁) - (CH₂)ₙ - N⁺ (R) (R₁) - (CH₂)ₘ - X (CH₂)ₚ]_{q}
repräsentiert wird, wobei
n, m. p und q gleiche oder verschiedene ganze Zahlen sind,
R und R₁ dieselben oder verschiedene anorganische Radikale sind, die ausgewählt sind aus der Gruppe bestehend aus substituierten und unsubstituierten Alkyl- und Aralkylradikalen und
X eine brückenbildende Gruppe ist, ausgewählt aus der Gruppe bestehend aus CH₂, O, S und N.

26. Aufzeichnungsmedium nach Anspruch 24, bei dem:
das kationisch modifizierte Polymer ausgewählt ist aus der Gruppe bestehend aus Polyacryl- und Polymethacrylestern und -amiden, in denen die Ester- oder Amidgruppe die quaternäre Ammoniumgruppe enthält.

27. Aufzeichnungsmedium nach Anspruch 16, bei dem:
das kationisch modifizierte Polymer ein Polymer oder Kopolymer von Dimethylaminoethyl-Methacrylat oder Dimethyl-Diallyl-Ammoniumchlorid ist.

28. Aufzeichnungsmedium nach Anspruch 16, bei dem:
das kationisch modifiziere Polymer Poly(Dimethylaminoethyl-Methacrylat) mit einem mittleren Molekulargewicht von etwa 4 000 bis 8 000 ist.

29. Aufzeichnungsmedium nach Anspruch 16, bei dem:
das Pigment in der Beschichtungsformulierung in einem Gewichtsverhältnis von etwa 2 bis etwa 10 enthalten ist, bezogen auf die Menge des in der Beschichtungsformulierung enthalten wasserlöslichen quervernetzbaren polymeren Bindemittels, oder
das Pigment in der Beschichtungsformulierung in einem Gewichtsverhältnis von etwa 2 bis etwa 7 enthalten ist, bezogen auf die Menge des in der Beschichtungsformulierung vorhandenen wasserlöslichen quervernetzbaren polymeren Bindemittels.

30. Aufzeichnungsmedium nach Anspruch 16, bei dem:
das Aufzeichnungsmedium zusätzlich einen Überzug auf einer Oberfläche der Matrixschicht aufweist, der einen optischen Aufheller enthält.

31. Aufzeichnungsmedium nach Anspruch 16, das auf einer Oberfläche der Matrixschicht einen Überzug aufweist, der einen optischen Aufheller enthält.

## Revendications

1. Formule de revêtement à base aqueuse pour milieu d'enregistrement à jet d'encre, qui comprend :
a) un liant polymère réticulable soluble dans l'eau,
b) un pigment, hautement adsorbant, de colorants de jet d'encre en une quantité d'environ 2 à environ 10 parties en poids par partie en poids de liant polymère réticulable soluble dans l'eau,
c) un agent réticulant à base de zirconium qui contient un cation de zirconium de formule Zr⁴⁺ ou un cation de zirconyle de formule ZrO²⁺ et
d) un polymère modifié sur le plan cationique.

2. Formule de revêtement à base aqueuse de la revendication 1, dans laquelle :
le liant polymère réticulable soluble dans l'eau contient des radicaux hydroxyle réactifs.

3. Formule de revêtement à base aqueuse de la revendication 1, dans laquelle :
le liant polymère réticulable soluble dans l'eau est choisi dans le groupe constitué de l'alcool polyvinylique, l'hydroxyéthylcellulose et l'amidon.

4. Formule de revêtement à base aqueuse de la revendication 1, dans laquelle :
le liant polymère réticulable soluble dans l'eau est un alcool polyvinylique ayant un degré d'hydrolyse d'environ 85 à 99+%.

5. Formule de revêtement à base aqueuse de la revendication 1, dans laquelle :
l'agent réticulant à base de zirconium contient un cation ZrO²⁺.

6. Formule de revêtement à base aqueuse de la revendication 1, dans laquelle :
l'agent réticulant à base de zirconium contient un cation Zr⁴⁺.

7. Formule de revêtement à base aqueuse de la revendication 1, dans laquelle :
l'agent réticulant à base de zirconium est choisi dans le groupe constitué des chlorure de zirconyle, nitrate de zirconyle, acétate de zirconyle, carbonate de zirconium et ammonium et sulfate de zirconium.

8. Formule de revêtement à base aqueuse de la revendication 1, dans laquelle :
le polymère modifié sur le plan cationique est présent dans la composition de revêtement en une quantité d'environ 0,05 à environ 0,35 parties par partie du pigment, sur une base poids par poids.

9. Formule de revêtement à base aqueuse de la revendication 1, dans laquelle :
(1) le polymère modifié sur le plan cationique contient un radical ammonium quaternaire dans sa structure moléculaire,
(2) le polymère modifié sur le plan cationique est aisément dispersible ou soluble dans ladite formule de revêtement et
(3) le polymère modifié sur le plan cationique ne se réticule pas avec l'agent réticulant à base de zirconium.

10. Formule de revêtement à base aqueuse de la revendication 9, dans laquelle :
le polymère modifié sur le plan cationique est représenté par la formule :
-[N⁺ (R) (R₁) - (CH₂)ₙ-N⁺(R) (R₁) - (CH₂)ₘ-X (CH₂)ₚ]_{q}
dans laquelle
n, m, p et q sont identiques ou différents et sont des nombres entiers,
R et R₁ sont identiques ou différents et sont des radicaux organiques choisis dans le groupe constitué de radicaux alkyle et aralkyle substitués et non substitués et
X est un groupement formant pont choisi dans le groupe constitué de CH₂, O, S, N.

11. Formule de revêtement à base aqueuse de la revendication 9, dans laquelle :
le polymère modifié sur le plan cationique est choisi dans le groupe constitué des amides et esters polyacryliques et polyméthacryliques dans lesquels le radical ester ou amido de ceux-ci contient ledit radical ammonium quaternaire.

12. Formule de revêtement à base aqueuse de la revendication 1, dans laquelle :
le polymère modifié sur le plan cationique est un polymère ou copolymère de diméthylaminoéthyl méthacrylate ou de chlorure de diméthyl diallyl ammonium.

13. Formule de revêtement à base aqueuse de la revendication 1, dans laquelle :
le polymère modifié sur le plan cationique est un poly-(diméthylaminoéthyl méthacrylate) ayant un poids moléculaire moyen d'environ 4000 à 8000.

14. Formule de revêtement à base aqueuse de la revendication 1, dans laquelle :
le pigment est présent dans la formule dans un rapport d'environ 2 à environ 10, sur une base poids/poids, par rapport à la quantité du liant polymère réticulable soluble dans l'eau présent dans la formule de revêtement ; ou
le pigment est présent dans la formule dans un rapport d'environ 2 à environ 7, sur une base poids/poids, par rapport à la quantité du liant polymère réticulable soluble dans l'eau présent dans la formule de revêtement.

15. Formule de revêtement à base aqueuse de la revendication 1, dans laquelle :
le pigment présente une absorption d'huile d'environ 150 à 400 g pour 100 g du pigment et est choisi dans le groupe constitué des silice synthétique, argile, terre de diatomées, silicate d'aluminium, zéolithe synthétique et alumine.

16. Milieu d'enregistrement de jet d'encre en plusieurs couleurs, comprenant un substrat sur une surface duquel est appliquée en revêtement une couche formant matrice préparée à partir d'une formule de revêtement à base aqueuse qui contient :
a) un liant polymère réticulable soluble dans l'eau,
b) un pigment, hautement adsorbant, de colorants de jet d'encre en une quantité d'environ 2 à environ 10 parties en poids par partie en poids de liant polymère réticulable soluble dans l'eau,
c) un agent réticulant à base de zirconium qui contient un cation de zirconium de formule Zr⁴⁺ ou un cation de zirconyle de formule ZrO²⁺ et
d) un polymère modifié sur le plan cationique.

17. Milieu d'enregistrement de jet d'encre en plusieurs couleurs de la revendication 16, dans lequel :
le liant polymère réticulable soluble dans l'eau contient des radicaux hydroxyle réactifs.

18. Milieu d'enregistrement de jet d'encre en plusieurs couleurs de la revendication 16, dans lequel :
le liant polymère réticulable soluble dans l'eau est choisi dans le groupe constitué de l'alcool polyvinylique, l'hydroxyéthylcellulose et l'amidon.

19. Milieu d'enregistrement de jet d'encre en plusieurs couleurs de la revendication 16, dans lequel :
le liant polymère réticulable soluble dans l'eau est un alcool polyvinylique ayant un degré d'hydrolyse d'environ 85 à 99+%.

20. Milieu d'enregistrement de jet d'encre en plusieurs couleurs de la revendication 16, dans lequel :
l'agent réticulant à base de zirconium contient un cation ZrO²⁺.

21. Milieu d'enregistrement de jet d'encre en plusieurs couleurs de la revendication 16, dans lequel :
l'agent réticulant à base de zirconium contient un cation Zr⁴⁺.

22. Milieu d'enregistrement de jet d'encre en plusieurs couleurs de la revendication 16, dans lequel :
l'agent réticulant à base de zirconium est choisi dans le groupe constitué des chlorure de zirconyle, nitrate de zirconyle, acétate de zirconyle, carbonate de zirconium et ammonium et sulfate de zirconium.

23. Milieu d'enregistrement de jet d'encre en plusieurs couleurs de la revendication 16, dans lequel :
le polymère modifié sur le plan cationique est présent dans la composition de revêtement en une quantité d'environ 0,05 à environ 0,35 parties par partie du pigment, sur une base poids par poids.

24. Milieu d'enregistrement de jet d'encre en plusieurs couleurs de la revendication 16, dans lequel :
(1) le polymère modifié sur le plan cationique contient un radical ammonium quaternaire dans sa structure moléculaire,
(2) le polymère modifié sur le plan cationique est aisément dispersible ou soluble dans ladite formule de revêtement et
(3) le polymère modifié sur le plan cationique ne se réticule pas avec l'agent réticulant à base de zirconium.

25. Milieu d'enregistrement de jet d'encre en plusieurs couleurs de la revendication 24, dans lequel :
le polymère modifié sur le plan cationique est représenté par la formule :
-[N⁺(R) (R₁) - (CH₂)ₙ-N⁺(R) (R₁) - (CH₂)ₘ-X (CH₂)ₚ]_{q}
dans laquelle
n, m, p et q sont identiques ou différents et sont des nombres entiers,
R et R₁ sont identiques ou différents et sont des radicaux organiques choisis dans le groupe constitué de radicaux alkyle et aralkyle substitués et non substitués et
X est un groupement formant pont choisi dans le groupe constitué de CH₂, O, S, N.

26. Milieu d'enregistrement de jet d'encre en plusieurs couleurs de la revendication 24, dans lequel :
le polymère modifié sur le plan cationique est choisi dans le groupe constitué des amides et esters polyacryliques et polyméthacryliques dans lesquels le radical ester ou amido de ceux-ci contient ledit radical ammonium quaternaire.

27. Milieu d'enregistrement de jet d'encre en plusieurs couleurs de la revendication 16, dans lequel :
le polymère modifié sur le plan cationique est un polymère ou copolymère de diméthylaminoéthyl méthacrylate ou de chlorure de diméthyl diallyl ammonium.

28. Milieu d'enregistrement de jet d'encre en plusieurs couleurs de la revendication 16, dans lequel :
le polymère modifié sur le plan cationique est un poly-(diméthylaminoéthyl méthacrylate) ayant un poids moléculaire moyen d'environ 4000 à 8000.

29. Milieu d'enregistrement de jet d'encre en plusieurs couleurs de la revendication 16, dans lequel :
le pigment est présent dans la formule dans un rapport d'environ 2 à environ 10, sur une base poids/poids, par rapport à la quantité du liant polymère réticulable soluble dans l'eau présent dans la formule de revêtement ; ou
le pigment est présent dans la formule dans un rapport d'environ 2 à environ 7, sur une base poids/poids, par rapport à la quantité du liant polymère réticulable soluble dans l'eau présent dans la formule de revêtement.

30. Milieu d'enregistrement de jet d'encre en plusieurs couleurs de la revendication 16, dans lequel :
le milieu d'enregistrement comprend en supplément une couche de recouvrement contenant un agent d'azurage optique sur une surface de la couche formant matrice

31. Milieu d'enregistrement de jet d'encre suivant la revendication 16, comportant, sur une surface de la couche formant matrice, un revêtement en surface comprenant un agent d'azurage optique.
